(19) Europäisches Patentamt
European Patent Office
Office européen des brevets

(11) EP 3 477 493 A1

(12) EUROPEAN PATENT APPLICATION

(43) Date of publication:
01.05.2019 Bulletin 2019/18

(51) Int Cl.:
G06F 17/11 (2006.01)        A63F 13/55 (2014.01)
G06N 99/00 (2019.01)

(21) Application number: 17275175.2

(22) Date of filing: 27.10.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: Prowler.io Limited
Cambridge, Cambridgeshire CB2 1LA (GB)

(72) Inventors:
• GRAU-MOYA, Jordi
Cambridge, Cambridgeshire CB2 1LA (GB)
• LEIBFRIED, Felix
Cambridge, Cambridgeshire CB2 1LA (GB)
• BOU-AMMAR, Haitham
Cambridge, Cambridgeshire CB2 1LA (GB)

(74) Representative: EIP
EIP Europe LLP
Fairfax House
15 Fulwood Place
London WC1V 6HU (GB)

(54) MACHINE LEARNING SYSTEM

(57) There is disclosed a machine learning technique of determining a policy for an agent controlling an entity in a two-entity system. The method comprises assigning a prior policy and a respective rationality to each entity of the two-entity system, each assigned rationality being associated with a permitted divergence of a policy associated with the associated entity from the prior policy $\rho$ assigned to that entity, and determining the policy to be followed by an agent corresponding to one entity by optimising an objective function $F^*(s)$, wherein the objective function $F^*(s)$ includes factors dependent on the respective rationalities and prior policies assigned to the two entities. In this way, the policy followed by an agent controlling an entity in a system can be determined taking into account the rationality of another entity within the system.

Fig. 4

Initialise function estimate — S401

Observe transition — S403

Store transition tuple — S405

Update function estimate — S407

Return function estimate — S409

While function estimate not converged

**Description**

Technical Field

This invention is in the field of machine learning systems, and has particular applicability to a two-entity reinforcement learning system.

Background

Machine learning involves a computer system learning what to do by analysing data, rather than being explicitly programmed what to do. While machine learning has been investigated for over fifty years, in recent years research into machine learning has intensified. Much of this research has concentrated on what are essentially pattern recognition systems.

In addition to pattern recognition, machine learning can be utilised for decision making. Many uses of such decision making have been put forward, from managing a fleet of taxis to controlling non-playable characters in a computer game. The practical implementation of such decision making presents many technical challenges.

Summary

According to a first aspect of the present invention, there is provided a machine learning method of determining a policy for an agent controlling an entity in a two-entity system. The method comprises assigning a prior policy and a respective rationality to each entity of the two-entity system, each assigned rationality being associated with a permitted divergence of a policy associated with the associated entity from the prior policy $\rho$ assigned to that entity, and determining the policy to be followed by an agent corresponding to one entity by optimising an objective function $F^*(s)$. By including in the objective function $F^*(s)$ factors dependent on the respective rationalities and prior policies assigned to the two entities, the performance of the agent can be varied away from optimal performance in accordance with the corresponding assigned rationality.

In an example, the other of the two entities acts in accordance with control signals derived from human inputs. Such an arrangement may be employed, for example, in a computer game where the machine-controlled entity is a non-playable participant within the game. For a two-entity system involving a human-controlled entity, a respective rationality can be assigned to each agent by recording a data set comprising a plurality of tuples, each tuple comprising data indicating a state at a corresponding time and respective actions performed by the two entities in that state, and processing the data set to estimate a rationality for the human-controlled entities. The rationality for the human-controlled entity is then assigned in dependence on the estimated rationality. As rationality is linked to divergence from the optimal policy, the rationality can be viewed as a skill level for a player. In this way, for example, in a game the skill level of an autonomous agent can be set the same as, slightly worse than or slightly better than a human player based on the estimated rationality of the human-controlled entity.

According to another aspect of the invention, there is provided a machine learning method of determining a skill level for a player, the method comprising recording a data set comprising a plurality of tuples, each tuple comprising data indicating a state at a corresponding time and respective actions performed by a human-controlled entity in that state, and processing the data set to estimate a rationality for the human-controlled entities in accordance with a policy. As rationality is linked to divergence from the policy, the rationality can be viewed as a skill level for a player.

Further features and advantages of the invention will become apparent from the following description of preferred embodiments of the invention, given by way of example only, which is made with reference to the accompanying drawings.

Brief Description of the Drawings

Figure 1 is a schematic diagram showing the main components of a data processing system used to implement methods according to a first embodiment of the invention;
Figure 2 is a schematic diagram showing the main components of a data processing system used to implement methods according to a second embodiment of the invention;
Figure 3 is a flow diagram representing a data processing routine implemented by the data processing system of Figure 1.
Figure 4 is a flow diagram representing a routine for updating an objective function estimate.
Figure 5 is a flow diagram representing a routine for updating an estimated objective function estimate and a rationality estimate.

Figure 6 is a flow diagram representing a routine for determining a policy of an agent.

Figure 7 is a flow diagram representing a routine for estimating the rationality of an entity.

Figure 8 is a schematic diagram of a first deep neural network (DNN) configured for use in an embodiment of the present invention.

Figure 9 is a schematic diagram of a second deep neural network (DNN) configured for use in an embodiment of the present invention.

Figure 10 is a schematic diagram of a server used to implement a learning subsystem in accordance with the present invention.

Figure 11 is a schematic diagram of a user device used to implement an interaction subsystem in accordance with the present invention.

Detailed Description

***Reinforcement learning: overview***

For the purposes of the following description and accompanying drawings, a reinforcement learning problem is definable by specifying the characteristics of one or more *agents* and an *environment.* The methods and systems described herein are applicable to a wide range of reinforcement learning problems, including both continuous and discrete high-dimensional state and action spaces

A software agent, referred to hereafter as an *agent,* is a computer program component that makes decisions based on a set of input signals and performs actions based on these decisions. In some applications of reinforcement learning, each agent is associated with a real-world entity (for example a taxi in a fleet of taxis). In other applications of reinforcement learning, an agent is associated with a virtual entity (for example, a non-playable character (NPC) in a video game). In some examples, an agent is implemented in software or hardware that is part of a real world entity (for example, within an autonomous robot). In other examples, an agent is implemented by a computer system that is remote from the real world entity.

An *environment* is a virtual system with which agents interact, and a complete specification of an environment is referred to as a *task.* In many practical examples of reinforcement learning, the environment simulates a real-world system, defined in terms of information deemed relevant to the specific problem being posed.

It is assumed that interactions between an agent and an environment occur at discrete time steps t= 0, 1, 2, 3, .... The discrete time steps do not necessarily correspond to times separated by fixed intervals. At each time step, the agent receives data corresponding to an observation of the environment and data corresponding to a reward. The data corresponding to an observation of the environment is referred to as a *state signal* and the observation of the environment is referred to as a *state.* The state perceived by the agent at time *t* is labelled $s_t$. The state observed by the agent may depend on variables associated with the agent itself.

In response to receiving a state signal indicating a state $s_t$ at a time *t*, an agent is able to select and perform an *action* $a_t$ from a set of available actions in accordance with a Markov Decision Process (MDP). In some examples, the state signal does not convey sufficient information to ascertain the true state of the environment, in which case the agent selects and performs the action $a_t$ in accordance with a Partially-Observable Markov Decision Process (PO-MDP). Performing a selected action generally has an effect on the environment. Data sent from an agent to the environment as an agent performs an action is referred to as an *action signal.* At a later time +1, the agent receives a new state signal from the environment indicating a new state $s_{t+1}$. The new state signal may either be initiated by the agent completing the action $a_t$, or in response to a change in the environment.

Depending on the configuration of the agents and the environment, the set of states, as well as the set of actions available in each state, may be finite or infinite. The methods and systems described herein are applicable in any of these cases.

Having performed an action $a_t$, an agent receives a *reward signal* corresponding to a numerical *reward* $R_{t+1}$, where the reward $R_{t+1}$ depends on the state $s_t$, the action $a_t$ and the state $s_{t+1}$. The agent is thereby associated with a sequence of states, actions and rewards $(s_t, a_t, R_{t+1}, s_{t+1}, ...)$ referred to as a trajectory *T*. The reward is a real number that may be positive, negative, or zero.

In response to an agent receiving a state signal, the agent selects an action to perform based on a *policy.* A policy is a stochastic mapping from states to actions. If an agent follows a policy $\pi$, and receives a state signal at time t indicating a specific state $s_t$ = s, the probability of the agent selecting a specific action $a_t$ = a is denoted by $\pi(a|s)$. A policy for which $\pi(a|s)$ takes values of either 0 or 1 for all possible combinations of *a* and s is a *deterministic* policy. Reinforcement learning algorithms specify how the policy of an agent is altered in response to sequences of states, actions, and rewards that the agent experiences.

Generally, the objective of a reinforcement learning algorithm is to find a policy that maximises the expectation value of a *return,* where the value of a return $G_n$ at any time depends on the rewards received by the agent at future times. For some reinforcement learning problems, the trajectory T is finite, indicating a finite sequence of time steps, and the agent eventually encounters a *terminal state $S_T$* from which no further actions are available. In a problem for which T is finite, the finite sequence of time steps refers to an *episode* and the associated task is referred to as an *episodic* task. For other reinforcement learning problems, the trajectory T is infinite, and there are no terminal states. A problem for which T is infinite is referred to as an infinite horizon task. As an example, a possible definition of the return is given by Equation (1) below:

$$G_t = \sum_{j=0}^{T-t-1} \gamma^j R_{t+j+1}, \qquad (1)$$

in which $\gamma$ is a parameter called the *discount factor,* which satisfies $0 \leq \gamma \leq 1$, with $\gamma = 1$ only being permitted if *T* is finite. Equation (1) states that the return assigned to an agent at time step *n* is the sum of a series of future rewards received by the agent, where terms in the series are multiplied by increasing powers of the discount factor. Choosing a value for the discount factor affects how much an agent takes into account likely future states when making decisions, relative to the state perceived at the time that the decision is made. Assuming the sequence of rewards $\{R_j\}$ is bounded, the series in Equation (1) is guaranteed to converge. A skilled person will appreciate that this is not the only possible definition of a return. For example, in R-learning algorithms, the return given by Equation (1) is replaced with an infinite sum over undiscounted rewards minus an average expected reward. The applicability of the methods and systems described herein is not limited to the definition of return given by Equation (1).

Two different expectation values are often referred to: the *state value* and the *action value* respectively. For a given policy $\pi$, the *state value function V(s)* is defined for each state s by the equation $V(s) = \mathbb{E}_\pi(G_t | s_t = s),$ which states that the state value of state s given policy $\pi$ is the expectation value of the return at time *t,* given that at time *t* the agent receives a state signal indicating a state $s_t = s$. Similarly, for a given policy $\pi$, the *action value function* $Q(s, a)$ is defined for each possible state-action pair (*s, a*) by the equation $Q(s, a) = \mathbb{E}_\pi(G_t | s_t = s, a_t = a),$ which states that the action value of a state-action pair (*s, a*) given policy $\pi$ is the expectation value of the return at time step *t,* given that at time *t* the agent receives a state signal indicating a state $s_t$ = s, and selects an action $a_t$ = a. A computation that results in a calculation or approximation of a state value or an action value for a given state or state-action pair is referred to as a *backup.*

In many practical applications of reinforcement learning, the number of possible states or state-action pairs is very large or infinite, in which case it is necessary to approximate the state value function or the action value function based on sequences of states, actions, and rewards experienced by the agent. For such cases, approximate value functions $\hat{v}(s, w)$ and $\hat{q}(s, a, w)$ are introduced to approximate the value functions $V(s)$ and $Q(s, a)$ respectively, in which *w* is a vector of parameters defining the approximate functions. Reinforcement learning algorithms then adjust the parameter vector *w* in order to minimise an error (for example a root-mean-square error) between the approximate value functions $\hat{v}(s, w)$ or $\hat{q}(s, a, w)$ and the value functions $V(s)$ or $Q(s, a)$.

***Example system architecture***

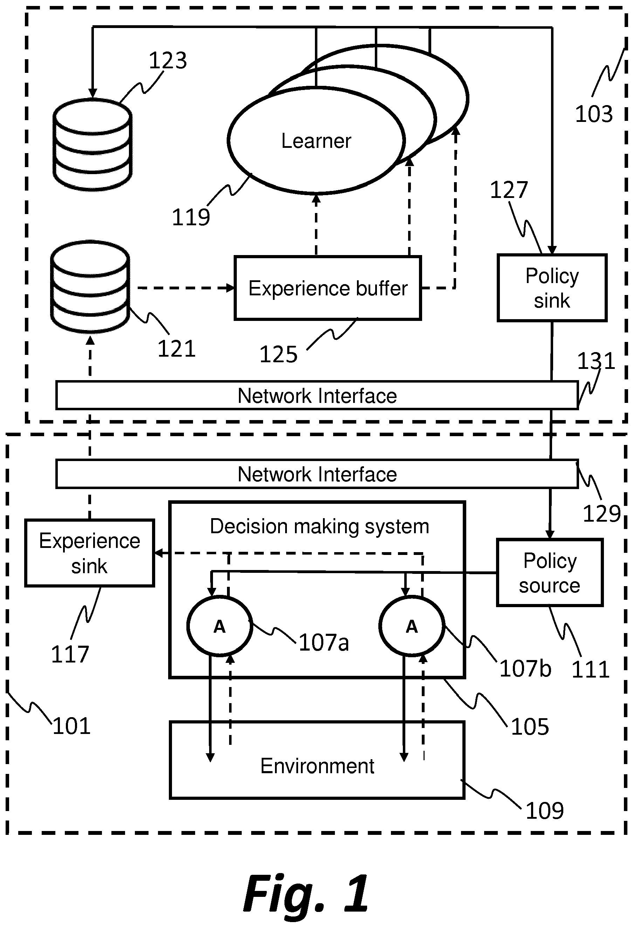

The data processing system of Figure 1 is an example of a system capable of implementing a reinforcement learning routine in accordance with embodiments of the present invention. The system includes interaction subsystem 101 and learning subsystem 103.

Interaction subsystem 101 includes decision making system 105, which comprises agents 107a and 107b. Agent 107a is referred to as the player, and agent 107b is referred to as the opponent. Agents 107a and 107b perform actions on environment 109 depending on state signals received from environment 109, with the performed actions selected in accordance with policies received from policy source 111. Interaction system also includes experience sink 117, which sends experience data to learning subsystem 103.

Learning subsystem 103 includes learner 119, which is a computer program that implements a learning algorithm. In a specific example, learner 119 includes several deep neural networks (DNNs), as will be described herein. However, the learner may also implement learning algorithms which do not involve DNNs. Learning subsystem 119 also includes two databases: experience database 121 and skill database 123. Experience database 121 stores experience data generated by interaction system 101, referred to as an experience record. Skill database 123 stores policy data generated by learner 119. Learning subsystem also includes experience buffer 125, which processes experience data in preparation for being sent to learner 119, and policy sink 127, which sends policy data generated by learner 119 to interaction subsystem 101.

Data is sent between interaction subsystem 101 and learning subsystem 103 via communication module 129 and communication module 131. Communication module 129 and communication module 131 are interconnected by a communications network (not shown). More specifically, in this example the network is the Internet, learning subsystem 103 includes several remote servers hosted on the Internet, and interaction subsystem 101 includes a local server. Learning subsystem 103 and interaction subsystem 101 interact via an application programming interface (API).

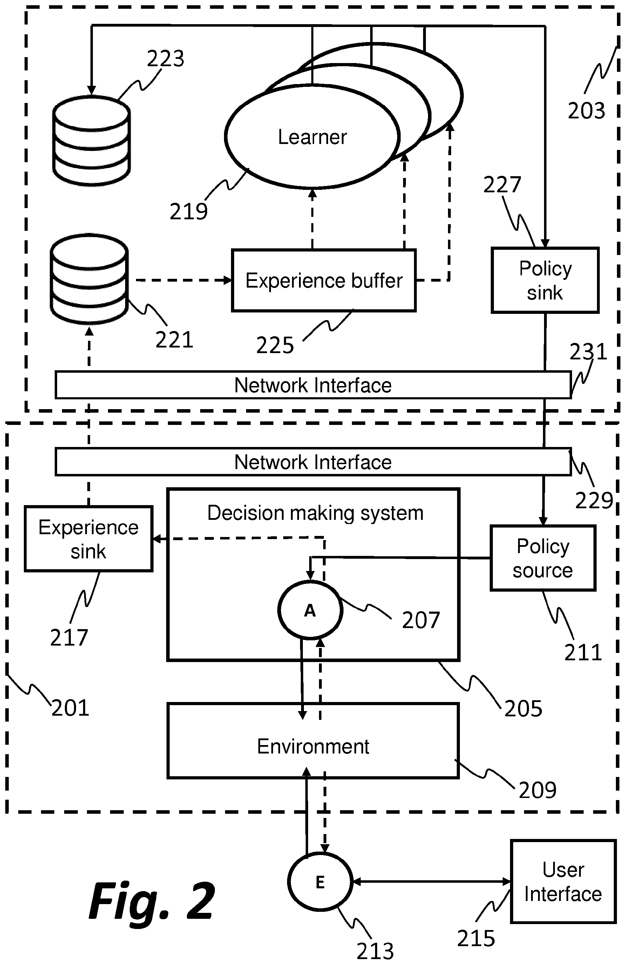

Figure 2 illustrates a similar data processing system to that of Figure 1. However, decision making system 205 comprises only one agent, agent 207, which is referred to as the player. In addition to agent 207, opponent entity 213 interacts with environment 209. In this example, opponent entity 213 is a human-controlled entity capable of performing actions on environment 209. A user interacts with opponent entity 213 via user interface 215.

### *Example data processing routine*

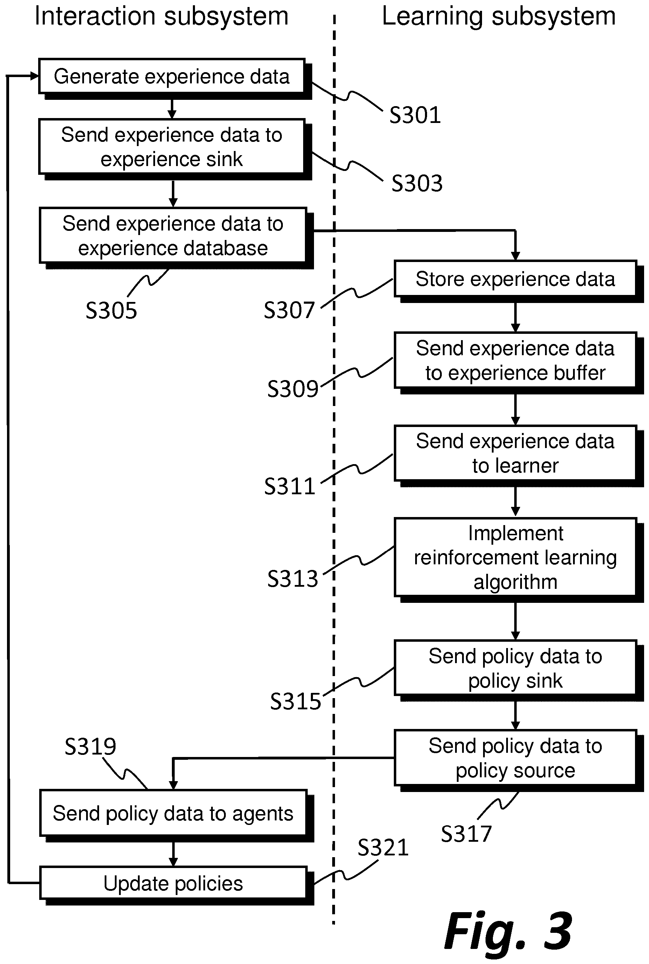

Figure 3 illustrates how the system of Figure 1 implements a data processing operation in accordance with the present invention. The interaction subsystem generates, at S301, experience data corresponding to an associated trajectory consisting of successive triplets of state-action pairs and rewards. The experience data comprises a sequence of tuples $\left(s_t, a_t^{(\mathrm{pl})}, a_t^{(\mathrm{opp})}, s_t'\right)$ for $t$ = 1, 2, ..., in which $s_t$ is an observation of the environment at time step $t$, $a_t^{(\mathrm{pl})}$ and $a_t^{(\mathrm{opp})}$ are actions performed by the player (agent 107a) and the opponent (agent 107b) respectively, and $s_t'$ is an observation of the environment immediately after the player and opponent have performed the actions $a_t^{(\mathrm{pl})}$ and $a_t^{(\mathrm{opp})}$. Decision making system 105 sends, at S303, experience data corresponding to sequentially generated tuples to experience sink 117. Experience sink 117 transmits, at S305, the experience data to experience database 121 via a communications network. Experience database 121 stores, at S307, the experience data received from experience sink 117.

Experience database 121 sends, at S309, the experience data to experience buffer 125, which arranges the experience data into an appropriate data stream for processing by learner 119. Experience buffer 121 sends, at S311, the experience data to learner 119.

Learner 119 receives experience data from experience buffer 125 and implements, at S313, a reinforcement learning algorithm in accordance with the present invention in order to generate policy data for agents 107a and 107b. In some examples, learner 119 comprises one or more Deep Neural Networks (DNNs), as will be described with reference to specific learning routines.

Learner 119 sends, at S315, policy data to policy sink 127. Policy sink 127 sends, at S317, the policy data to policy source 111 via the network. Policy source 111 then sends, at S319, the policy data to agents 107a and 107b, causing the policies of agents 107a and 107b to be updated at S321. At certain times (for example, when a policy is measured to satisfy a given performance metric), learner 119 also sends policy data to skill database 123. Skill database 123 stores a skill library including data relating to policies learned during the operation of the data processing system, which can later be provided to agents and/or learners in order to negate the need to relearn the same policies from scratch.

### *Bounded rationality*

An optimal policy $\pi^*$ in normal reinforcement learning is one that maximises an objective $V(s)$ (the state value function). An optimal state value function $V^*(s)$ for an infinite horizon task is given by:

$$V^*(s) = \max_{\pi} \mathbb{E}\left[\sum_{t=0}^{\infty} \gamma^t R(s_t, a_t)\right]. \tag{2}$$

An entity that follows an optimal rational policy $\pi^*$ can be stated to be perfectly rational. By introducing into the reinforcement learning algorithm a constraint restricting divergence from a prior policy $\rho$, the entities no longer act in a perfectly rational manner. In this case, the objective of the reinforcement learning algorithm is to identify a policy that maximises an objective function $V(s)$ that is subject to the constraint that the Kullback-Leibler (KL) divergence between the policy $\pi$ and a predefined prior policy $\rho$ is less than a positive constant C:

$$\sum_{t=0}^{\infty} \gamma^t \text{KL}(\pi(a_t|s_t)||\rho(a_t|s_t)) \leq C. \tag{3}$$

The smaller the value of C, the stricter the constraint and therefore the more similar the determined policy $\pi$ will be to the prior policy $\rho$ and the less similar the determined policy $\pi$ will be to the optional rational policy $\pi^*$.

The bounded rationality case can be reformulated as an unconstrained maximisation problem using a Lagrange multiplier $\beta$, leading to an objective that is solved by an objective function satisfying:

$$F^*(s) = \max_{\pi} \mathbb{E}\left[\sum_{t=0}^{\infty} \gamma^t \left(R(s_t, a_t) - \frac{1}{\beta}\log\frac{\pi(a_t|s_t)}{\rho(a_t|s_t)}\right)\right]. \tag{4}$$

Increasing the Lagrange multiplier $\beta$ has an effect equivalent to increasing C in Equation (3). Note that as $\beta \to \infty$ the determined policy $\pi$ converges to the optimal rational policy $\pi^*$ and $F^*_{\beta \to \infty}(s) = V^*(s),$ whereas as $\beta \to 0$ the determined policy $\pi$ converges on the prior policy $\rho$ and $F^*_{\beta \to 0}(s) = V^\rho(s).$

The subtracted term in equation (4) bounds the rationality of the corresponding entity, because it makes the agent make decisions more according to the prior policy (which might not be fully rational), and less according to the optimal rational policy $\pi^*$.

***Two-entity bounded rationality***

For a two-entity system, i.e. a system involving exactly two entities, each entity can follow its own policy, and chooses actions accordingly. Each entity may have a corresponding agent. For example, in the context of a computer game involving a machine-controlled player and a machine-controlled opponent, one agent may be associated with the player while the other agent may be associated with the opponent. The agent for the player will select an action $a_t^{(pl)}$ in accordance with policy $\pi_{pl}$ and the agent for the opponent will select an action $a_t^{(op)}$ in accordance with policy $\pi_{op}$ such that:

$$a_t^{(pl)} \sim \pi_{pl}\left(a_t^{(pl)}|s_t\right), \tag{5}$$

$$a_t^{(opp)} \sim \pi_{opp}\left(a_t^{(opp)}|s_t\right) \tag{6}$$

In effect, these equations say: given a state $s_t$, the action of the player/opponent is chosen according to a probability distribution over possible actions available to the player/opponent in that state, the probability distribution being specified by the policy of the player/opponent.

Given a pair of actions $a_t^{(pl)}, a_t^{(opp)}$ being performed at time $t$, the state of the environment transitions according to a probability distribution specified by a joint transition model:

$$s_{t+1} \sim T\left(s_{t+1}|s_t, a_t^{(pl)}, a_t^{(opp)}\right) \tag{7}$$

Although this transition could be deterministic, in which case a given pair of actions $a_t^{(\mathrm{pl})}$, $a_t^{(\mathrm{opp})}$ being performed in a state $s_t$ will always lead to the same successor state $s_{t+1}$, more generally this is not the case, in which case Equation (7) is stochastic.

The agents receive a joint reward $R(s_t, a_t^{(\mathrm{pl})}, a_t^{(\mathrm{opp})})$. For collaborative settings, both entities seek positive rewards. For adversarial settings, the player seeks positive rewards and the opponent seeks negative rewards (or vice-versa).

Assuming that the rationality of the player/opponent is represented by a Lagrange multiplier, an objective of the reinforcement learning can be represented as optimising a function of the form:

$$F^*(s) = \max_{\pi_{\mathrm{pl}}} \underset{\pi_{\mathrm{opp}}}{\mathrm{ext}}\, \mathbb{E}\left[ \sum_{t=0}^{\infty} \gamma^t \left( R\left(s_t, a_t^{(\mathrm{pl})}, a_t^{(\mathrm{opp})}\right) \right.\right.$$
$$\left.\left. - \frac{1}{\beta_{\mathrm{pl}}} \log \frac{\pi_{\mathrm{pl}}\left(a_t^{(\mathrm{pl})} | s_t\right)}{\rho_{\mathrm{pl}}\left(a_t^{(\mathrm{pl})} | s_t\right)} - \frac{1}{\beta_{\mathrm{opp}}} \log \frac{\pi_{\mathrm{opp}}\left(a_t^{(\mathrm{opp})} | s_t\right)}{\rho_{\mathrm{opp}}\left(a_t^{(\mathrm{opp})} | s_t\right)} \right) \right]. \tag{8}$$

For collaborative settings in which the player and the opponent collaborate to maximise the return, $\beta_{\mathrm{opp}} > 0$ and ext = max. For adversarial settings, where the player aims to maximise the return and the opponent aims to minimise the return, $\beta_{\mathrm{opp}} < 0$ and ext = min.

Equation (8) refers to a separate predefined prior policy $\rho$ for the player and for the opponent. The subtracted terms bound the rationality of the two respective entities. The aim is to solve the problem posed by Equation (8) for the two unknown policies $\pi_{\mathrm{pl}}$ and $\pi_{\mathrm{opp}}$. To do so, an optimal joint action function $F^*(s, a^{(\mathrm{pl})}, a^{(\mathrm{opp})})$ is introduced via Equation (9):

$$F^*\left(s, a^{(\mathrm{pl})}, a^{(\mathrm{opp})}\right) = R\left(s, a^{(\mathrm{pl})}, a^{(\mathrm{opp})}\right) + \gamma \sum_{s'} T\left(s' | s, a^{(\mathrm{pl})}, a^{(\mathrm{opp})}\right) F^*(s'). \tag{9}$$

Given $F^*(s, a^{(\mathrm{pl})}, a^{(\mathrm{opp})})$, the corresponding optimal function $F^*(s)$ is computed using Equations (10) and (11):

$$F^*\left(s, a^{(\mathrm{pl})}\right) = \frac{1}{\beta_{\mathrm{opp}}} \log \sum_{a^{(\mathrm{opp})}} \rho_{\mathrm{opp}}\left(a^{(\mathrm{opp})} | s\right) \exp\left(\beta_{\mathrm{opp}} F^*\left(s, a^{(\mathrm{pl})}, a^{(\mathrm{opp})}\right)\right), \tag{10}$$

$$F^*(s) = \frac{1}{\beta_{\mathrm{pl}}} \log \sum_{a^{(\mathrm{pl})}} \rho_{\mathrm{pl}}\left(a^{(\mathrm{pl})} | s\right) \exp\left(\beta_{\mathrm{pl}} F^*\left(s, a^{(\mathrm{pl})}\right)\right). \tag{11}$$

Equations (9) to (11) form a set of simultaneous equations to be solved for $F^*(s, a^{(\mathrm{pl})}, a^{(\mathrm{opp})})$. In an example, the solution proceeds using a Q-learning-type learning algorithm to incrementally update an estimate $F(s, a^{(\mathrm{pl})}, a^{(\mathrm{opp})})$ until it converges to a satisfactory estimate of the optimal function $F^*(s, a^{(\mathrm{pl})}, a^{(\mathrm{opp})})$ that solves Equations (9) to (11). As Q-learning is an off-policy method, during learning the player and opponent can follow *any* policy (for example, uniformly random exploration) and the estimate $F(s, a^{(\mathrm{pl})}, a^{(\mathrm{opp})})$ will still converge to the function $F^*(s, a^{(\mathrm{pl})}, a^{(\mathrm{opp})})$ provided that there is sufficient exploration of the state space.

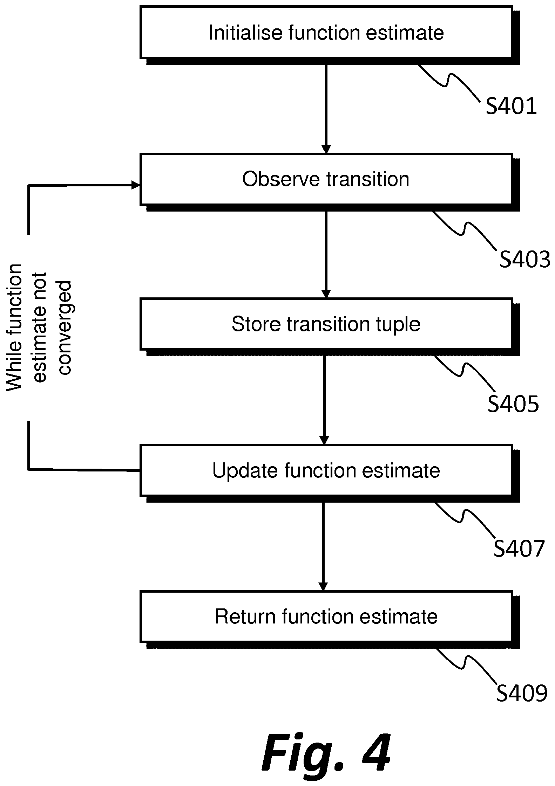

Figure 4 represents an example of routine that is implemented by a learner to determine an estimate $F(s, a^{(\mathrm{pl})}, a^{(\mathrm{opp})})$ of the function $F^*(s, a^{(\mathrm{pl})}, a^{(\mathrm{opp})})$ that solves Equations (9) to (11). The learner implements a Q-learning-type algorithm, in which the estimate $F(s, a^{(\mathrm{pl})}, a^{(\mathrm{opp})})$ is updated incrementally whilst a series of transitions in a two-entity system is observed. The learner starts by initialising, at S401, a function estimate $F(s, a^{(\mathrm{pl})}, a^{(\mathrm{opp})})$ to zero for all possible states and available actions for the player and the opponent. The player and opponent select actions according to respective policies as shown by Equations (5) and (6). The learner observes, at S403, an action of each of the two entities, along with the corresponding transition from a state $s_t$ to successor state $s_t'$. The learner stores, at S405, a tuple of the form $\left(s_t, a_t^{(pl)}, a_t^{(opp)}, s_t'\right)$ associated with the transition.

The learner updates, at S407, the function estimate $F(s, a^{(pl)}, a^{(opp)})$. In this example, in order to update the function estimate $F(s, a^{(pl)}, a^{(opp)})$, the learner first substitutes the present estimate of $F\left(s_t, a_t^{(pl)}, a_t^{(opp)}\right)$ into Equation (10) to calculate an estimate $F\left(s_t, a_t^{(pl)}\right)$ of $F^*\left(s_t, a_t^{(pl)}\right)$, then substitutes the calculated estimate $F\left(s_t, a_t^{(pl)}\right)$ into Equation (11) to calculates an estimate $F(s_t')$ of $F^*(s_t')$. The learner then uses the estimate $F(s_t')$ to update the estimate $F\left(s_t, a_t^{(pl)}, a_t^{(opp)}\right)$, as shown by Equation (12):

$$
\begin{aligned}
F\left(s_t, a_t^{(pl)}, a_t^{(opp)}\right) &\leftarrow F\left(s_t, a_t^{(pl)}, a_t^{(opp)}\right) \\
&+ \alpha\left(R_t + \gamma F(s_t') - F\left(s_t, a_t^{(pl)}, a_t^{(opp)}\right)\right).
\end{aligned}
\tag{12}
$$

The learner continues to update function estimates as transitions are observed until the function estimate $F(s, a^{(pl)}, a^{(opp)})$ has converged sufficiently according to predetermined convergence criteria. The learner returns, at S609, the converged function estimate $F(s, a^{(pl)}, a^{(opp)})$, which is an approximation of the optimal function $F^*(s, a^{(pl)}, a^{(opp)})$.

Once a satisfactory estimate of $F^*(s, a^{(pl)}, a^{(opp)})$ has been obtained, for example using the routine of Figure 4, policies that optimise the objective of Equation (8) are given by Equations (13) and (14):

$$
\begin{aligned}
\pi_{pl}^*\left(a^{(pl)}|s\right) \\
= \frac{1}{Z_{pl}(s)} \rho_{pl}\left(a^{(pl)}|s\right) \\
\times \exp\left(\frac{\beta_{pl}}{\beta_{opp}} \sum_{a^{(opp)}} \rho_{opp}\left(a^{(opp)}|s\right) \exp\left(\beta_{opp} F^*\left(s, a^{(pl)}, a^{(opp)}\right)\right)\right),
\end{aligned}
\tag{13}
$$

$$
\begin{aligned}
\pi_{opp}^*\left(a^{(opp)}|s\right) \\
= \frac{1}{Z_{opp}(s)} \rho_{opp}\left(a^{(opp)}|s\right) \\
\times \exp\left(\frac{\beta_{opp}}{\beta_{pl}} \sum_{a^{(pl)}} \rho_{pl}\left(a^{(pl)}|s\right) \exp\left(\beta_{pl} F^*\left(s, a^{(pl)}, a^{(opp)}\right)\right)\right),
\end{aligned}
\tag{14}
$$

in which the normalising terms $Z_{pl}(s)$ and $Z_{opp}(s)$ are given by:

$$Z_{\mathrm{pl}}(s)$$

$$= \sum_{a^{(\mathrm{pl})}} \rho_{\mathrm{pl}}\big(a^{(\mathrm{pl})}|s\big) \tag{15}$$

$$\times \exp\left(\frac{\beta_{\mathrm{pl}}}{\beta_{\mathrm{opp}}} \sum_{a^{(\mathrm{opp})}} \rho_{\mathrm{opp}}\big(a^{(\mathrm{opp})}|s\big) \exp\big(\beta_{\mathrm{opp}} F^*\big(s, a^{(\mathrm{pl})}, a^{(\mathrm{opp})}\big)\big)\right),$$

and

$$Z_{\mathrm{opp}}(s) = \sum_{a^{(\mathrm{opp})}} \rho_{\mathrm{opp}}\big(a^{(\mathrm{opp})}|s\big)$$

$$\times \exp\left(\frac{\beta_{\mathrm{opp}}}{\beta_{\mathrm{pl}}} \sum_{a^{(\mathrm{pl})}} \rho_{\mathrm{pl}}\big(a^{(\mathrm{pl})}|s\big) \exp\big(\beta_{\mathrm{pl}} F^*\big(s, a^{(\mathrm{pl})}, a^{(\mathrm{opp})}\big)\big)\right). \tag{16}$$

### *Estimating the opponent's rationality*

When both entities are machine-controlled, as in the system of Figure 1, the rationality of both the player and the opponent can be set and parameterised by the Lagrange multipliers $\beta_{\mathrm{pl}}$ and $\beta_{\mathrm{opp}}$ respectively. In that case, the objective is to find policies for both the player and the opponent according to the predetermined degrees of rationality.
If, however, rationality of the player entity is known but the rationality of the opponent entity is unknown, then it is necessary to estimate the Lagrange multiplier $\beta_{\mathrm{opp}}$ corresponding to the rationality of the opponent entity. Such a situation occurs, for example, in a computer game in which the player is a machine-controlled entity but the opponent is a human-controlled entity, such as in the system of Figure 2. A technique for estimating the Lagrange multiplier $\beta_{\mathrm{opp}}$ corresponding to the rationality of a human-controlled opponent entity will now be described in the context of such a computer game.

Firstly, the game is played to generate a dataset $D = \left\{s_i, a_i^{(\mathrm{pl})}, a_i^{(\mathrm{opp})}\right\}_{i=1}^{m}$ in which each of the $m$ tuples corresponds to a sampled transition. During the generation of the dataset $D$, the machine-controlled non-playable character may be assigned an arbitrary policy. An assumption is made that the opponent selects actions according to a policy given by Equation (11). Based on this assumption, a likelihood estimator is given by:

$$P(D|\beta_{\mathrm{opp}})$$

$$= \prod_{i=1}^{m} \frac{1}{Z_{\mathrm{opp}}(s_i)} \rho_{\mathrm{opp}}\left(a_i^{(\mathrm{opp})}|s_i\right) \tag{17}$$

$$\times \exp\left(\frac{\beta_{\mathrm{opp}}}{\beta_{\mathrm{pl}}} \sum_{a^{(\mathrm{pl})}} \rho_{\mathrm{pl}}\big(a^{(\mathrm{pl})}|s_i\big) \exp\big(\beta_{\mathrm{pl}} F^*\big(s_i, a^{(\mathrm{pl})}, a_i^{(\mathrm{opp})}\big)\big)\right),$$

in which

$$Z_{\text{opp}}(s_i)$$

$$= \sum_{a_i^{(\text{opp})}} \rho_{\text{opp}}\left(a_i^{(\text{opp})}|s_i\right) \tag{18}$$

$$\times \exp\left(\frac{\beta_{\text{opp}}}{\beta_{\text{pl}}} \sum_{a^{(\text{pl})}} \rho_{\text{pl}}\left(a^{(\text{pl})}|s_i\right) \exp\left(\beta_{\text{pl}} F^*\left(s_i, a^{(\text{pl})}, a_i^{(\text{opp})}\right)\right)\right).$$

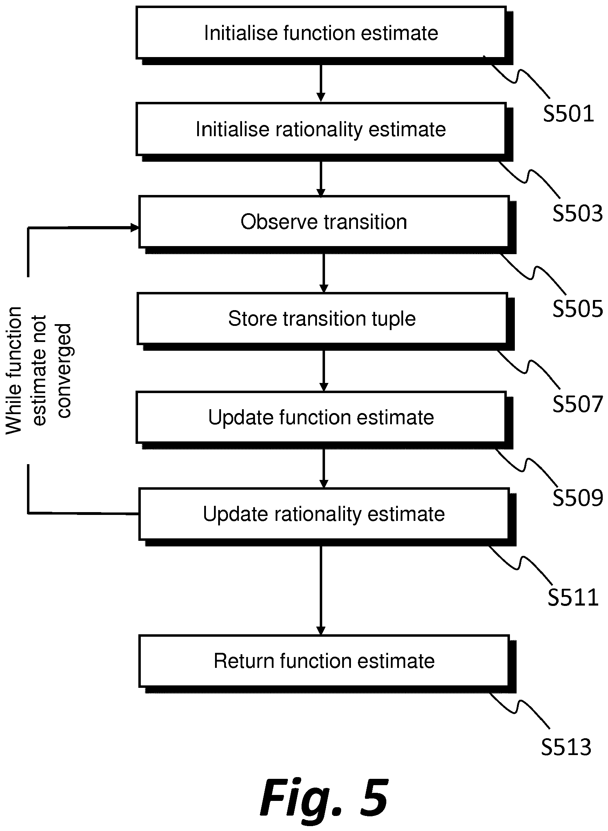

Figure 5 represents an example of routine that is implemented by a learner to determine an estimate $F(s, a^{(\text{pl})}, a^{(\text{opp})})$ of the function $F^*(s, a^{(\text{pl})}, a^{(\text{opp})})$ that solves Equations (9) to (11), as well as an estimate of $\beta_{\text{opp}}$, which represents the rationality of the opponent entity. The learner implements a Q-learning-type algorithm, in which the estimates are updated incrementally whilst a series of transitions in the two-entity system is observed. The learner starts by initialising, at S501, a function estimate $F(s, a^{(\text{pl})}, a^{(\text{opp})})$ to zero for all possible states and available actions for the player and the opponent. The learner also initialises, at S503, the value of $\beta_{\text{opp}}$ to an arbitrary value. The player selects actions according to a policy as shown by Equation (5), and it is assumed that the opponent selects actions according to a fixed, but unknown, policy. The learner observes, at S505, an action of each of the two entities, along with the corresponding transition from a state $s_t$ to successor state $s_t'$. The learner stores, at S507, a tuple of the form $\left(s_t, a_t^{(\text{pl})}, a_t^{(\text{opp})}, s_t'\right)$ associated with the transition.

The learner updates, at S509, the function estimate $F(s, a^{(\text{pl})}, a^{(\text{opp})})$. In this example, in order to update the function estimate $F(s, a^{(\text{pl})}, a^{(\text{opp})})$, the learner first substitutes the present estimate of $F\left(s_t, a_t^{(\text{pl})}, a_t^{(\text{opp})}\right)$ into Equation (10) to calculate an estimate $F\left(s_t, a_t^{(\text{pl})}\right)$ of $F^*\left(s_t, a_t^{(\text{pl})}\right)$, then substitutes the calculated estimate $F\left(s_t, a_t^{(\text{pl})}\right)$ into Equation (11) to calculates an estimate $F(s_t')$ of $F^*(s_t')$. The learner then uses the estimate $F(s_t')$ to update the estimate $F\left(s_t, a_t^{(\text{pl})}, a_t^{(\text{opp})}\right)$, using the rule shown by Equation (19):

$$F\left(s_t, a_t^{(\text{pl})}, a_t^{(\text{opp})}\right) \leftarrow F\left(s_t, a_t^{(\text{pl})}, a_t^{(\text{opp})}\right)$$

$$+ \alpha\left(R_t + \gamma F(s_t') - F\left(s_t, a_t^{(\text{pl})}, a_t^{(\text{opp})}\right)\right). \tag{19}$$

The learner updates, at S511, the estimate of $\beta_{\text{opp}}$ using the rule shown by Equation (20):

$$\beta_{\text{opp}} \leftarrow \beta_{\text{opp}} + \alpha_2 \frac{\partial}{\partial \beta_{\text{opp}}} \log P\left(D|\beta_{\text{opp}}\right). \tag{20}$$

The learner continues to update the estimates $F\left(s_t, a_t^{(\text{pl})}, a_t^{(\text{opp})}\right)$ and $\beta_{\text{opp}}$ as transitions are observed until predetermined convergence criteria are satisfied. The learner returns, at S513, the converged function estimate $F(s, a^{(\text{pl})}, a^{(\text{opp})})$, which is an approximation of the optimal function $F^*(s, a^{(\text{pl})}, a^{(\text{opp})})$. Note that at each iteration within the algorithm, $\log P(D|\beta_{\text{opp}})$ and its partial derivative with respect to $\beta_{\text{opp}}$ are computed, which depend on $m$ previous transitions.

When the Q-learning algorithm has converged to satisfactory estimates of $F^*(s, a^{(\text{pl})}, a^{(\text{opp})})$ and $\beta_{\text{opp}}$, the player

policy that optimises the objective of Equation (8) is given by Equation (13).

### Summary of routines

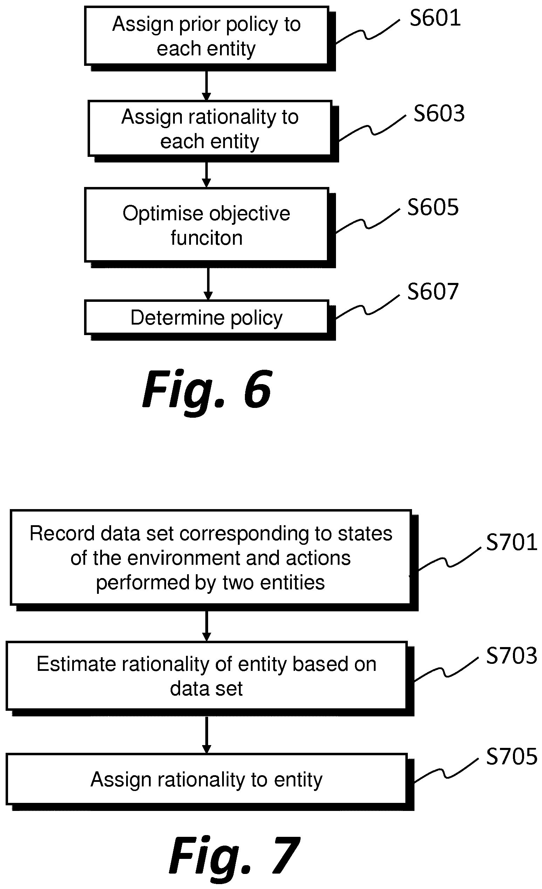

As shown in Figure 6, a routine in accordance with the present invention involves assigning, at S601, a prior policy to each of the two entities in the decision making system. The prior policies of the player and the opponent are denoted $\rho_{pl}$ and $\rho_{opp}$ respectively.

The routine assigns, at S603, a rationality to each entity. The rationalities of the player and the opponent are given by $\beta_{pl}$ and $\beta_{opp}$ respectively. In the case of two agents, $\beta_{pl}$ and $\beta_{opp}$ are parameters to be selected. In the case in which the player is an agent but the opponent is an entity with an unknown rationality, $\beta_{pl}$ is is a parameter, and one of the objectives of the routine is to estimate $\beta_{opp}$.

The routine optimises, at S605, an objective function. In some examples, optimising the objective function is achieved using an off-policy learning algorithm such as a Q-learning-type algorithm, in which a function $F(s, a^{(pl)}, a^{(opp)})$ is updated iteratively.

The routine determines, at S607, a policy for the player. In some examples, the determined policy is determined from the objective function by Equation (13). In the example that both the player and the opponent are agents, the routine also determines a policy for the opponent using Equation (14).

As shown in Figure 7, in a case in which the opponent is an entity with an unknown rationality, the routine records, at S701, a data set corresponding to states of the environment and actions performed by the player and the opponent.

The routine estimates, at S703, the rationality $\beta_{opp}$ of the opponent based on the data set. In some examples, this is done using an extension to a Q-learning-type algorithm, in which an estimate of $\beta_{opp}$ is updated along with the function $F(s, a^{(pl)}, a^{(opp)})$. In one example, this update is achieved using Equation (20).

The routine assigns, at S705, the estimated rationality $\beta_{opp}$ to the opponent.

### Deep Neural Networks

For problems with high dimensional state spaces, it is necessary to use function approximators to estimate the function $F^*(s, a^{(pl)}, a^{(opp)})$. In some examples, deep Q-networks, which are Deep Neural Networks (DNNs) applied in the context of Q-learning-type algorithms, are used as function approximators. Compared with other types of function approximator, DNNs have advantages with regard to the complexity of functions that can be approximated and also with regard to stability.

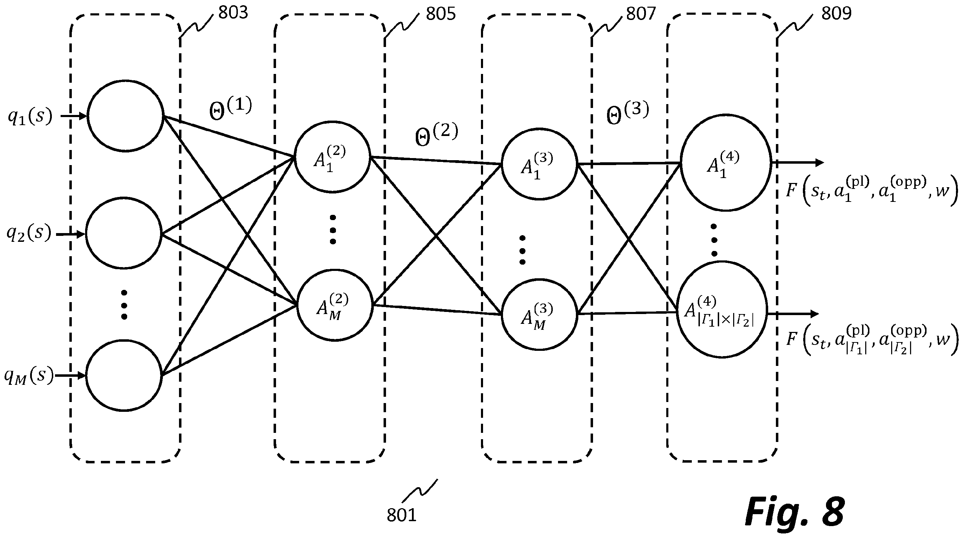

Figure 8 shows a first DNN 801 used to approximate the function $F^*(s, a^{(pl)}, a^{(opp)})$ in one example of the invention. First DNN 801 consists of input layer 803, two hidden layers: first hidden layer 805 and second hidden layer 807, and output layer 809. Input layer 803, first hidden layer 805 and second hidden layer 807 each has $M$ neurons and output layer 809 has $|\Gamma_1| \times |\Gamma_2|$ neurons, where $\Gamma_1$ is the set of actions available to the player and $\Gamma_2$ is the set of actions available to the opponent. Each neuron of input layer 803, first hidden layer 605 and second hidden layer 807 is connected with each neuron in the subsequent layer. The specific arrangement of hidden layers, neurons, and connections is referred to as the architecture of the network. A DNN is any artificial neural network with multiple hidden layers, though the methods described herein may also be implemented using artificial neural networks with one or zero hidden layers. Different architectures may lead to different performance levels depending on the complexity and nature of the function $F^*(s, a^{(pl)}, a^{(opp)})$ to be learnt. Associated with each set of connections between successive layers is a matrix $\Theta^{(j)}$ for $j = 1, 2, 3$ and for each of these matrices the elements are the connection weights between the neurons in the preceding layer and subsequent layer.

First DNN 801 takes as its input a feature vector q representing a state s, having components $q_i$ for $i = 1, ..., M$. The output of DNN 801 is a $|\Gamma_1| \times |\Gamma_2|$ matrix denoted $F(s, a^{(pl)}, a^{(opp)}; w)$, and has components

$$F\left(s, a_i^{(pl)}, a_j^{(opp)}; w\right)$$

for $i = 1, ..., |\Gamma_1|, j = 1, ..., |\Gamma_2|$. The vector of weights w contains the elements of the matrices $\Theta^{(j)}$ for $j = 1, 2, 3$, unrolled into a single vector.

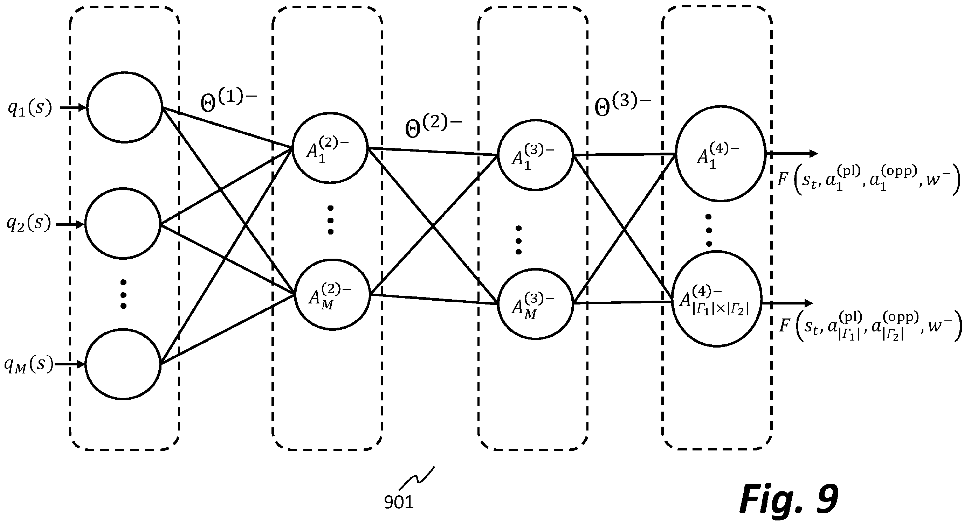

As shown in Figure 9, second DNN 901 has the same architecture as first DNN 801. Initially, the vector of weights $w^-$ of second DNN 901 is the same as the vector of weights $w$ of DNN 801. However, the vector of weights $w^-$ is not updated every time the vector of weights w is updated, as described hereafter. The output of second DNN 901 is denoted $F(s, a^{(pl)}, a^{(opp)}; w^-)$

In order for first DNN 801 and second DNN 901 to be used in the context of the routine of Figure 6 (or Figure 7), the learner initialises the elements of the matrices $\Theta^{(j)}$ for $j = 1, 2, 3$, at S601 (or S701), to values in an interval $[-\delta, \delta]$, where $\delta$ is a small user-definable parameter. The elements of the corresponding matrices in second DNN 901 are initially set to the same values as those of first DNN 801, such that $w^- \leftarrow w$.

The learner observes, at S603 (or S705), an action of each of the two entities, along with the corresponding transition from a state $s_t$ to successor state $s_t'$. The learner stores, at S605 (or S707), a tuple of the form $\left( s_t, a_t^{(\mathrm{pl})}, a_t^{(\mathrm{opp})}, s_t' \right)$ associated with the transition, in a replay memory, which will later be used for sampling transitions.

The learner implements forward propagation to calculate a function estimate $F(s, a^{(\mathrm{pl})}, a^{(\mathrm{opp})}; w)$. The components of $q$ are multiplied by the components of the matrix $\Theta^{(1)}$ corresponding to the connections between input layer 803 and first hidden layer 805. Each neuron of first hidden layer 805 computes a real number $A_k^{(2)} = g(z)$, referred to as the activation of the neuron, in which $z = \sum_{\mathrm{m}} \Theta_{km}^{(1)} q_m$ is the weighted input of the neuron. The function $g$ is generally nonlinear with respect to its argument and is referred to as the activation function. In this example, $g$ is the sigmoid function. The same process of is repeated for second hidden layer 807 and for output layer 809, where the activations of the neurons in each layer are used as inputs to the activation function to compute the activations of neurons in the subsequent layer. The activation of the neurons in output later 809 are the components of the function estimate $F(s, a^{(\mathrm{pl})}, a^{(\mathrm{opp})}; w)$.

The learner updates the function estimate, at S607 (or S709), by minimising a loss function $L(w)$ given by

$$L(w) = \mathbb{E}\left[ \left( R\left(s, a^{(\mathrm{pl})}, a^{(\mathrm{opp})}\right) + \gamma F\left(s; w^-\right) - F\left(s, a^{(\mathrm{pl})}, a^{(\mathrm{opp})}; w\right) \right)^2 \right], \qquad (21)$$

where $F(s; w^-)$ is calculate from $F(s, a^{(\mathrm{pl})}, a^{(\mathrm{opp})}; w^-)$ using Equations (10) and (11). The expectation value in Equation (21) is estimated by sampling over a number $N_s$ of sample transitions from the replay memory, calculating the quantity in square brackets for each sample transition, and taking the mean over the sampled transitions. In this example, $N_s = 32$.

In order to minimise (21), the well-known backpropagation algorithm is used to calculate gradients of the function estimate $F(s, a^{(\mathrm{pl})}, a^{(\mathrm{opp})}; w)$ with respect to the vector of parameters w, and gradient descent is used to vary the elements of w such that the loss function $L(w)$ decreases. After a number $N_T$ of transitions have been observed, and correspondingly $N_T$ learning steps have been performed, the elements of the weight matrices in second DNN 901 are updated to those of first DNN 801, such that $w^- \leftarrow w$. In this example, $N_T = 10000$. Sampling transitions from a replay memory and periodically updating a second DNN 901 (sometimes referred to as a target network) as described above allows the learning routine to handle non-stationarity.

***Example computer devices for implementing learning methods***

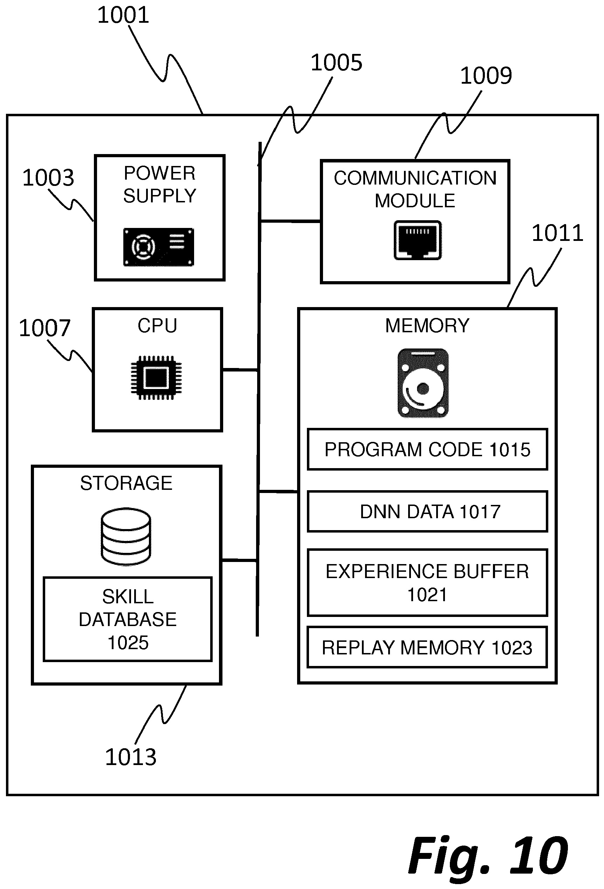

Figure 10 shows server 1001 configured to implement a learning subsystem in accordance with the present invention in order to implement the methods described above. In this example, the learning subsystem is implemented using a single server, though in other examples the learning subsystem is distributed over several servers. Server 1001 includes power supply 1003 and system bus 1005. System bus 1005 is connected to: CPU 1007; communication module 1009; memory 1011; and storage 1013. Memory 1011 stores program code 1015; DNN data 1017; experience buffer 1021; and replay memory 1023. Storage 1013 stores skill database 1025. Communication module 1009 receives experience data from an interaction subsystem and sends policy data to the interaction subsystem (thus implementing a policy sink).

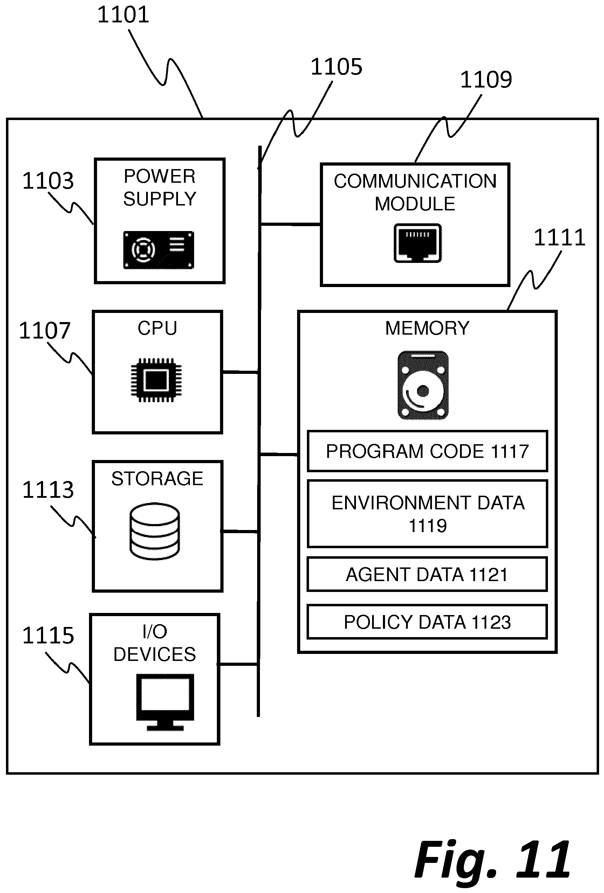

Figure 11 shows local computing device 1101 configured to implement an interaction subsystem in accordance with the present invention in order to implement the methods described above. Local computing device 1101 includes power supply 1103 and system bus 1105. System bus 1105 is connected to: CPU 1107; communication module 1109; memory 1111; storage 1113; and input/output (I/O) devices 1115. Memory 1111 stores program code 11117; environment data 1119; agent data 1121; and policy data 1123. In this example, I/O devices 1115 include a monitor, a keyboard, and a mouse. Communication module 1109 receives policy data from server 1001 (thus implementing a policy source) and sends experience data to server 1001 (thus implementing an experience sink).

The above embodiments are to be understood as illustrative examples of the invention. Further embodiments of the invention are envisaged. In particular, the system architectures illustrated in Figures 1 and 2 are exemplary, and the methods discussed in the present application could alternatively be performed, for example, by a stand-alone server, a user device, or a distributed computing system not corresponding to either of Figures 1 or 2.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

**Claims**

1. A machine learning method of determining a policy for an agent controlling an entity in a two-entity system, the method comprising:

   assigning a prior policy and a respective rationality to each entity of the two-entity system, each assigned rationality being associated with a permitted divergence of a policy associated with the associated entity from the prior policy ρ assigned to that entity; and
   determining the policy to be followed by an agent corresponding to one entity by optimising an objective function $F^*(s)$,
   wherein the objective function $F^*(s)$ includes factors dependent on the respective rationalities and prior policies assigned to the two entities.

2. The machine learning method of claim 1, wherein the objective function $F^*(s)$ corresponds to an expected value of future rewards following actions performed by the two entities in the state s constrained by the rationality of each entity.

3. The machine learning method of claim 2, wherein for each entity in the two-entity system, the objective function $F^*(s)$ includes a factor corresponding to the KL divergence of the determined policy from the assigned prior policy.

4. The machine learning method of claim 3, wherein the assigned rationality for each entity corresponds to a Lagrange multiplier for the corresponding KL divergence.

5. The machine learning method of claim 4, wherein the objective function $F^*(s)$ is mathematically equivalent to:

$$F^*(s) = \max_{\pi_1} \operatorname{ext}_{\pi_2} \mathbb{E}\left[\sum_{t=0}^{\infty} \gamma^t \left( R\left(s_t, a_t^{(1)}, a_t^{(2)}\right) - \frac{1}{\beta_1} \log \frac{\pi_1\left(a_t^{(1)}|s_t\right)}{\rho_1\left(a_t^{(1)}|s_t\right)} \right.\right.$$

$$\left.\left. - \frac{1}{\beta_2} \log \frac{\pi_2\left(a_t^{(2)}|s_t\right)}{\rho_2\left(a_t^{(2)}|s_t\right)} \right)\right]$$

where:

- $R\left(s_t, a_t^{(1)}, a_t^{(1)}\right)$ is a joint reward when in state $s_t$ one of the two agents performs action $a_t^{(1)}$ and the other of the two agents performs action $a_t^{(2)}$;
- $\beta_1$ is a Lagrange multiplier corresponding to the rationality of said one of the two agents;
- $\beta_2$ is a Lagrange multiplier corresponding to the rationality of said other of the two agents;
- $\pi_1$ is the current policy of said one of the two agents;
- $\rho_1$ is the prior policy of said one of the two agents;
- $\pi_2$ is the current policy of said one of the two agents; and
- $\rho_2$ is the prior policy of said one of the two agents.

6. The machine learning method of claim 5, wherein if the two entities collaborate $\operatorname{ext}_{\pi_2}$ is $\max_{\pi_2}$, and if the two entities are opposed $\operatorname{ext}_{\pi_2}$ is $\min_{\pi_2}$.

7. The machine learning method of any preceding claim, wherein the other of the two entities acts in accordance with control signals derived from human inputs.

8. The machine learning method of claim 7, wherein assigning a respective rationality to each agent comprises:

recording data set comprising a plurality of tuples, each tuple comprising data indicating a state at a corresponding time and respective actions performed by the two entities in that state;
processing the data set to estimate a rationality for said other of the two entities;
assigning the rationality for said other of the two entities in dependence on the estimated rationality for said other of the two entities.

9. The machine learning method of claim 8, wherein the rationality of said other of the two agents is estimated using the likelihood estimator:

$$P(D|\beta_2) = \prod_{i=1}^{m} \frac{1}{Z_2(s_i)} \rho_2\left(a_i^{(2)}|s_i\right) \times$$

$$\exp\left(\frac{\beta_2}{\beta_1} \sum_{a^{(1)}} \rho_{\text{pl}}\left(a^{(1)}|s_i\right) \exp\left(\beta_1 F^*\left(s_i, a^{(1)}, a_i^{(2)}\right)\right)\right)$$

in which:

$$Z_2(s_i) = \sum_{a_i^{(2)}} \rho_2\left(a_i^{(2)}|s_i\right) \times \exp\left(\frac{\beta_2}{\beta_2} \sum_{a^{(2)}} \rho_1\left(a^{(1)}|s_i\right) \exp\left(\beta_1 F^*\left(s_i, a^{(1)}, a_i^{(2)}\right)\right)\right).$$

10. The machine learning method of claim 9, further comprising assigning a rationality to said one entity in dependence on the estimated rationality for said other of the two entities.

11. The machine learning method of any of claims 1 to 6, wherein the other of the two entities acts in accordance with control signals from a second agent, and wherein the method further comprises determining a policy for the second agent.

12. The machine learning method of any preceding claim, further comprising the agent:

receiving a state signal from an environment indicating that the environment is in a state *s*; and

selecting an action $a_t^{(1)}$ for said one entity from a set of available actions in accordance with the determined policy; and

transmitting an action signal indicating the selected action $a_t^{(1)}$.

13. The machine learning method of any preceding claims, wherein the two-entity system comprises a computer game.

14. A machine learning system, comprising a processor adapted to perform the method of any preceding claim.

15. A computer program product comprising instructions which, when executed by a processor, cause the processor to carry out the method of any of claims 1 to 13.

**Fig. 1**

**Fig. 2**

Interaction subsystem | Learning subsystem

Generate experience data — S301

Send experience data to experience sink — S303

Send experience data to experience database

S305

S307 — Store experience data

S309 — Send experience data to experience buffer

S311 — Send experience data to learner

S313 — Implement reinforcement learning algorithm

S315 — Send policy data to policy sink

Send policy data to policy source

S319

Send policy data to agents

S321

Update policies

S317

*Fig. 3*

```
┌─────────────────────────────────────┐
│      Initialise function estimate    │
└─────────────────────────────────────┘
                    │           ╲╱  S401
                    ▼
┌─────────────────────────────────────┐
│         Observe transition           │
└─────────────────────────────────────┘
                    │           ╲╱  S403
                    ▼
┌─────────────────────────────────────┐
│        Store transition tuple        │
└─────────────────────────────────────┘
                    │           ╲╱  S405
                    ▼
┌─────────────────────────────────────┐
│      Update function estimate        │
└─────────────────────────────────────┘
                    │           ╲╱  S407
                    ▼
┌─────────────────────────────────────┐
│       Return function estimate       │
└─────────────────────────────────────┘
                                ╲╱  S409
```

While function estimate not converged

# Fig. 4

```
                    ┌─────────────────────────────┐
                    │  Initialise function estimate │
                    └─────────────────────────────┘
                                  │                      S501
                                  ▼
                    ┌─────────────────────────────┐
                    │  Initialise rationality estimate │
                    └─────────────────────────────┘
                                  │                      S503
                                  ▼
                    ┌─────────────────────────────┐
          ┌────────▶│      Observe transition       │
          │         └─────────────────────────────┘
          │                       │                     S505
          │                       ▼
          │         ┌─────────────────────────────┐
          │         │     Store transition tuple    │
          │         └─────────────────────────────┘
          │                       │                     S507
          │                       ▼
          │         ┌─────────────────────────────┐
          │         │    Update function estimate   │
          │         └─────────────────────────────┘
          │                       │                     S509
          │                       ▼
          │         ┌─────────────────────────────┐
          └─────────│   Update rationality estimate │
                    └─────────────────────────────┘
                                  │                      S511
                                  ▼
                    ┌─────────────────────────────┐
                    │    Return function estimate   │
                    └─────────────────────────────┘
                                                         S513
```

While function estimate not converged

# Fig. 5

Assign prior policy to
each entity — S601

Assign rationality to
each entity — S603

Optimise objective
funciton — S605

Determine policy — S607

# Fig. 6

Record data set corresponding to states
of the environment and actions
performed by two entities — S701

Estimate rationality of entity based on
data set — S703

Assign rationality to entity — S705

# Fig. 7

Fig. 8

EP 3 477 493 A1

Fig. 9

1001

1005

1009

1003 **POWER SUPPLY**

**COMMUNICATION MODULE**

1011

1007 **CPU**

**MEMORY**

PROGRAM CODE 1015

DNN DATA 1017

EXPERIENCE BUFFER 1021

REPLAY MEMORY 1023

**STORAGE**

SKILL DATABASE 1025

1013

*Fig. 10*

**1101**

**1105**

**1109**

**1103** POWER SUPPLY

**1107** CPU

**1113** STORAGE

**1115** I/O DEVICES

COMMUNICATION MODULE

**1111**

MEMORY

PROGRAM CODE 1117

ENVIRONMENT DATA 1119

AGENT DATA 1121

POLICY DATA 1123

*Fig. 11*

Europäisches
Patentamt

European
Patent Office

Office européen
des brevets

**EUROPEAN SEARCH REPORT**

Application Number

EP 17 27 5175

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Felix Leibfried ET AL: "An Information-Theoretic Optimality Principle for Deep Reinforcement Learning", Cornell University Library , 6 August 2017 (2017-08-06), XP055469442, Retrieved from the Internet: URL:https://arxiv.org/pdf/1708.01867v1.pdf [retrieved on 2018-04-23] * pages 2 and 5 * | 1-15 | INV. G06F17/11 A63F13/55 G06N99/00 |
| X | GRAU-MOYA JORDI ET AL: "Planning with Information-Processing Constraints and Model Uncertainty in Markov Decision Processes", 4 September 2016 (2016-09-04), ECCV 2016 CONFERENCE; [LECTURE NOTES IN COMPUTER SCIENCE; LECT.NOTES COMPUTER], SPRINGER INTERNATIONAL PUBLISHING, CHAM, PAGE(S) 475 - 491, XP047355579, ISSN: 0302-9743 ISBN: 978-3-319-69952-3 [retrieved on 2016-09-04] * section 3 * | 1-15 | |
| A | FRENAY B ET AL: "QL"2, a simple reinforcement learning scheme for two-player zero-sum Markov games", NEUROCOMPUTING, ELSEVIER, AMSTERDAM, NL, vol. 72, no. 7-9, March 2009 (2009-03), pages 1494-1507, XP025976321, ISSN: 0925-2312, DOI: 10.1016/J.NEUCOM.2008.12.022 [retrieved on 2009-01-12] * the whole document * | 1-15 | TECHNICAL FIELDS SEARCHED (IPC) G06F A63F G06N |

-/--

The present search report has been drawn up for all claims

| Place of search | Date of completion of the search | Examiner |
|---|---|---|
| Berlin | 23 April 2018 | Huguet Serra, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 17 27 5175

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHEN WENLIN ET AL: "A unifying learning framework for building artificial game-playing agents", ANNALS OF MATHEMATICS AND ARTIFICIAL INTELLIGENCE, BALTZER, BASEL, CH, vol. 73, no. 3, 31 January 2015 (2015-01-31), pages 335-358, XP035485308, ISSN: 1012-2443, DOI: 10.1007/S10472-015-9450-1 [retrieved on 2015-01-31] * the whole document * | 1-15 | |
| A | US 2005/245303 A1 (GRAEPEL KURT H [GB] ET AL) 3 November 2005 (2005-11-03) * the whole document * | 1-15 | |
| T | JORDI GRAU-MOYA ET AL: "Non-Equilibrium Relations for Bounded Rational Decision-Making in Changing Environments", ENTROPY, vol. 20, no. 1, 21 December 2017 (2017-12-21), page 1, XP055468122, DOI: 10.3390/e20010001 * the whole document * | | TECHNICAL FIELDS SEARCHED (IPC) |
| T | Jordi Grau-Moya ET AL: "Balancing Two-Player Stochastic Games with Soft Q-Learning", Cornell University Library , 9 February 2018 (2018-02-09), XP055469677, Retrieved from the Internet: URL:https://arxiv.org/pdf/1802.03216.pdf [retrieved on 2018-04-23] * the whole document * | | |

The present search report has been drawn up for all claims

| Place of search | Date of completion of the search | Examiner |
|---|---|---|
| Berlin | 23 April 2018 | Huguet Serra, G |

EPO FORM 1503 03.82 (P04C01)

## ANNEX TO THE EUROPEAN SEARCH REPORT
## ON EUROPEAN PATENT APPLICATION NO.

EP 17 27 5175

This annex lists the patent family members relating to the patent documents cited in the above-mentioned European search report.
The members are as contained in the European Patent Office EDP file on
The European Patent Office is in no way liable for these particulars which are merely given for the purpose of information.

23-04-2018

| Patent document cited in search report | Publication date | Patent family member(s) | Publication date |
|---|---|---|---|
| US 2005245303 A1 | 03-11-2005 | NONE | |

For more details about this annex : see Official Journal of the European Patent Office, No. 12/82

EPO FORM P0459